# EUROPÄISCHE PATENTSCHRIFT

(11) **EP 0 453 735 B1**
(45) Veröffentlichungstag und Bekanntmachung des Hinweises auf die Patenterteilung: **27.07.1994**
(21) Anmeldenummer: 91102995.7
(22) Anmeldetag: 28.02.1991
(51) Int. Cl.: C21D 9/14, C21D 1/10, H05B 6/38

(54) **Einrichtung zum innenseitigen induktiven Erwärmen von Zylinderlaufbüchsen von Hubkolbenmaschinen zum Zwecke des Härtens**
Apparatus for internal induction heating of cylinder liners of combustion engines for hardening said liners
Dispositif pour le chauffage par induction de la surface interne d'une chemise de cylindre d'un moteur à combustion en vue d'un durcissement de ladite chemise

(30) Priorität: 25.04.1990 DE 4013148
(43) Veröffentlichungstag der Anmeldung: 30.10.1991
(73) Patentinhaber: MERCEDES-BENZ AG, 70327 Stuttgart (DE)
(72) Erfinder: Burger, Dieter, Dr., W-7143 Vaihingen (DE); Burböck, Walter, W-7000 Stuttgart 1 (DE); Linden, Peter, Dr., W-7314 Wernau (DE)

(56) Entgegenhaltungen:
- DE-C- 913 455
- GB-A- 717 620
- US-A- 2 424 794
- US-A- 2 510 942
- US-A- 3 823 927

## Beschreibung

Die Erfindung betrifft eine Einrichtung zum innenseitigen induktiven Erwärmen von Zylinderlaufbüchsen von Hubkolbenmaschinen zum Zwecke des Härtens nach dem Oberbegriff von Anspruch 1, wie sie beispielsweise aus der GB-PS 717 620 als bekannt hervorgeht.

Die bekannte Härteeinrichtung zeigt einen in die Zylinderlaufbüchse axial eintauchbaren Induktorkopf mit einer axial ausgerichteten Induktorschleife und einem in Umfangsrichtung unmittelbar benachbarten Brausekopf. Der Induktorkopf ist durch speichenartig angeordnete Stäbe innerhalb der Zylinderlaufbüchse mit Spiel zentriert. Zum Härten wird die Zylinderlaufbüchse an dem ortsfest und unbeweglich gehaltenen Induktorkopf bzw. an der Induktorschleife und der Abschreckbrause langsam vorbeigedreht, so daß ein in Umfangsrichtung zusammenhängender gehärteter Streifen an der Innenoberfläche der Zylinderlaufbüchse entsteht. Nachteilig an der bekannten Härteeinrichtung ist, daß durch das notwendige Spiel zwischen den Zentrierstäben für den Induktorkopf und der Innenoberfläche der Zylinderlaufbüchse die Relativlage der Induktorschleife zur Innenoberfläche im Ausmaß dieses Spieles undefiniert und dementsprechend die induktive Ankoppelung der Zylinderwandung an die Induktorschleife unterschiedlich ist. Diese im Ausmaß des notwendigen Spieles undefinierte Relativlage der Induktorschleife zur Innenoberfläche kann nur dadurch kompensiert werden, daß bei dem Härtevorgang die Arbeitsparameter so gewählt werden, daß dieses Spiel unerheblich ist. Auf diese Weise sind jedoch nur sehr große Einhärtetiefen erzielbar. Dies wiederum führt zu relativ großen Härteverzügen, die anschließend in aufwendiger Weise wieder herausgeschliffen werden müssen, was unwirtschaftlich ist. Bei einer großen Einhärtetiefe kann es u.U. auch zu oberflächlichen Anschmelzungen und einer anschließenden Rißbildung kommen. Aus diesem Grunde hat sich das induktive Härten von Zylinderlaufbüchsen nach Wissen der Anmelderin bisher nicht bis zur Serienreife durchsetzen können.

Aufgabe der Erfindung ist es, die gattungsgemäße Einrichtung dahingehend weiterzubilden, daß mit ihr verzugsarme und im Motorbetrieb brauchbare Härteergebnisse erzielt werden können; etwaige Restverzüge sollen so gering sein, daß sie durch ein übliches und unter Serienbedingungen beherrschbares Hohnen ohne nennenswerten Mehraufwand herausgeschliffen werden können.

Diese Aufgabe wird erfindungsgemäß durch die kennzeichnenden Merkmale von Anspruch 1 gelöst. Dank der Festklemmung des Induktorkopfes innerhalb der Zylinderlaufbüchse und dem Erwärmen nur in einem relativen Stillstand wird beim Erwärmen jedesmal eine exakt definierte, spielfreie Relativlage von Induktorschleife und Innenoberfläche herbeigeführt, so daß mit fein abgestimmen Arbeitsparametern gearbeitet werden kann. Dadurch ist es möglich, die Parameter so zu wählen, daß die Einhärtetiefe sich nur auf eine dünne Randschicht beschränkt, die zum einen verzugsfrei oder zumindest sehr verzugsarm bleibt und die außerdem auf eine Fremdabschreckung verzichten kann, da das darunterliegende, nicht erwärmte Basismaterial die erwärmte Randschicht durch Wärmeabfluß selber abschrecken kann. Aufgrund des Verzichtes einer Fremdabschreckung bleibt der Induktorkopf sehr sauber und er kann dementsprechend sehr exakt positioniert werden. Zum vollständigen Härten einer Zylinderlaufbüchse werden lediglich einzelne Hartstreifen gelegt, die in Umfangsrichtung einen Abstand aufweisen und durch ungehärtete Zwischenstreifen voneinander getrennt sind. Diese einzelnen Streifen werden absatzweise bzw. schrittweise nacheinander angebracht. Aufgrund der dünnen Randschichthärtung und aufgrund der Anbringung einer in Streifen aufgelösten Härtezone sind die beim Härten auftretenden Verzüge vernachlässigbar, klein oder zumindest so gering, daß sie mit dem Hohnen in ohne weiteres vertretbarem Aufwand wieder herausgeschliffen werden können. Auch bietet die in Streifen aufgelöste Härtezone eine im Motorbetrieb ausreichend große Tragfähigkeit. Die Streifen können auf den Bereich beschränkt bleiben, den die Kolbenringe des Hubkolbens im Bereich der oberen Totlage einnehmen.

Zweckmäßige Ausgestaltungen der Erfindung können den Unteransprüchen entnommen werden. Im übrigen ist die Erfindung anhand eines in den Zeichnungen dargestellten Ausführungsbeispieles nachfolgend noch erläutert; dabei zeigen:
- Figur 1: eine Seitenansicht eines Induktorkopfes nach der Erfindung,
- Figur 2: eine axiale Ansicht des Induktorkopfes nach Figur 1 und
- Figur 3: einen Schnitt durch einen Motorblock und den in eine Zylinderlaufbüchse eingetauchten Induktorkopf nach den Figuren 1 und 2.

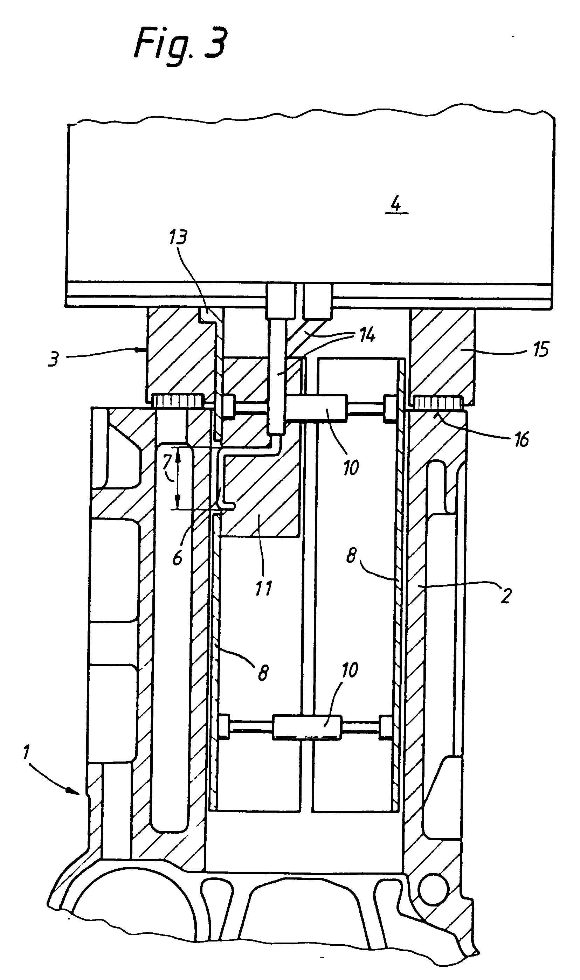

Die in den Figuren nur zum Teil dargestellte Einrichtung dient zum innenseitigen induktiven Erwärmen von Zylinderlaufbüchsen 2 von Hubkolbenmaschinen auf Umwandlungstemperatur zum Zwecke des Härtens. Von der Hubkolbenmaschine ist in Figur 3 lediglich der Motorblock 1 dargestellt. Die Zylinderlaufbüchse 2 ist darin monolitischer, integraler Bestandteil des Motorblocks 1. Es sind auch andere Fälle bekannt, bei denen die Zylinderlaufbüchse lösbar in den Motorblock eingebaut oder als eine gesonderte Büchse in ihn eingepreßt ist.

Wesentlicher Bestandteil der Härteeinrichtung ist der in die Zylinderlaufbüchse 2 einführbare Induktorkopf 3. Dieser ist durch eine zeichnerisch nicht dargestellte Maschine, beispielsweise einen Manipulator geführt, der das Einführen des Induktorkopfes in die Zylinderlaufbüchse, das Umfangspositionieren und Weiterdrehen sowie - nach Vollendung des Härtevorganges einer Zylinderlaufbüchse - das Wechseln des Induktorkopfes in die nächstfolgende Zylinderlaufbüchse durchführen kann. Hierbei ist es allerdings auch denkbar, daß ein Teil der Bewegungen z.B. eine relative Verschiebung des Motorblocks und dessen Handhabung mit dem Motorblock verlagert wird, wie dies beispielsweise auch bei der Eingangs zitierten Literaturstelle gezeigt ist. Insbesondere bei einzelnen Zylinderlaufbüchsen, die erst nachträglich in einen Motorblock eingesetzt werden, erscheint es ohne weiteres zweckmäßig, daß ein großer Teil der Relativbewegungen auch auf Seiten der Zylinderlaufbüchse durchgeführt wird. Im Zusammenhang mit weiteren peripheren Einrichtungen im Zusammenhang mit dem Induktorkopf 3 ist auch noch eine Hochfrequenz-Stromquelle mit hoher Leistung zu erwähnen. Hierbei handelt es sich um einen Hochfrequenz-Generator, der unter Verwendung von Halbleiterelementen oder Röhren eine Hochfrequenzspannung erzeugt, wobei in dem vorliegenden Anwendungsfall Frequenzen im Bereich von oberhalb 100 kHz, und zwar insbesondere 400 bis 500 kHz von Interesse sind. Aufgrund der hohen Frequenzen ist eine induktive Ankopplung insbesondere der randnahen Schichten besonders wirkungsvoll und es können dadurch hohe Leistungsdichten übertragen werden. Die vom Hochfrequenzgenerator erzeugte Hochfrequenzspannung wird durch einen induktornah angebrachten Übertrager 4 auf niedrigere Spannung und entsprechend höhere Ströme umgespannt. Unterhalb des Übertragers 4 ist der bereits erwähnte Induktorkopf 3 angebracht, der mit dem Übertrager 4 fest verbunden ist. Der Übertrager 4 muß also sämtliche Bewegungen des Induktorkopfes 3 mitvollführen.

Der Induktorkopf enthält wenigstens eine Induktorschleife 5 in Form eines elektrischen Leiters 6, der sich über den gesamten axialen Bereich 7 der zu härtenden Zone erstreckt, der aber in Umfangsrichtung nur über einen kleinen Bruchteil des zu härtenden Bereiches hinwegreicht. In der Arbeitsposition der Induktorschleife weist der Leiter 6 über seine gesamte Länge hinweg einen überall gleich großen Abstand zur Innenoberfläche der Zylinderlaufbüchse 2 auf. Dieser Arbeitsabstand beträgt etwa 0,3 bis 0,7 mm; die jeweilige Größe hängt vom jeweiligen Einsatzfall und von den gewünschten Härteparametern ab. Der Arbeitsabstand sollte mindestens mit einer Genauigkeit von ± 5/100 mm eingehalten werden, um gleichbleibende Härteergebnisse von Werkstück zu Werkstück reproduzieren zu können.

Um diese hohe Positioniergenauigkeit der Arbeitslage der Induktorschleife 5 sicherzustellen, ist der Induktorkopf 3 mit seiner an die Größe der Zylinderlaufbüchse 2 angepaßten Ausrichtvorrichtung erfindungsgemäß in besonderer Weise ausgestaltet. Diese Ausrichtvorrichtung dient zum mechanischen Ausrichten des Induktorkopfes 3 bzw. der Induktorschleife 5 in eine definierte radiale Lage zur Innenoberfläche der Zylinderlaufbüchse 2. Die Ausrichtvorrichtung besteht aus nicht magnetisierbarem Werkstoff, um eine induktive Erwärmung der Ausrichtvorrichtung durch das Streufeld des Induktorkopfes zu vermeiden. Vorzugsweise wird Messing, Aluminium oder auch Edelstahl verwendet, soweit nicht elektrisch isolierende Werkstoffe zum Einsatz kommen müssen oder soweit nicht, beispielsweise für den Leiter 6 der Induktorschleife 5, Kupfer als ein elektrisch besonders gut leitender Werkstoff zu empfehlen ist.

Zur exakten Ausrichtung des Induktorkopfes 3 innerhalb der Zylinderlaufbüchse 2 ist die Ausrichtvorrichtung als ein spreizbarer, mittenfreier Käfig ausgebildet, der außenseitig mit spielfrei und unter Krafteinwirkung an die Innenoberfläche der Zylinderlaufbüchse 2 anlegbaren Klemmschalen 8 versehen ist. Anstelle der im Ausführungsbeispiel gezeigten halbzylindrischen Klemmschalen 8 ist es auch denkbar, radial verschiebbare Klemmstäbe oder Klemmnoppen am Außenumfang der käfigartigen Ausrichtvorrichtung anzubringen und mit einer geeigneten Mechanik gemeinsam radial zu verschieben. Hierauf soll weiter unten noch einmal eingegangen werden. Die beiden halbzylindrischen Klemmschalen 8 sind über ein Scharnier 9 entlang einer Mantellinie gelenkig miteinander verbunden; im Bereich der gegenüberliegenden Mantellinie stoßen die beiden Klemmschalen unter Zwischenschaltung eines gewissen Abstandes stumpf aneinander. In diesem Bereich sind innerhalb der beiden Klemmschalen 8 in einem axialen Abstand zueinander zwei Stellzylinder 10 vorgesehen, die von einer extern angeordneten Druckquelle mit fluidischer Energie beaufschlagt werden können. Mittels der beiden beidseitig beaufschlagbaren Stellzylinder 10 können die beiden Klemmschalen 8 radial nach außen gespreizt und unter Krafteinwirkung spielfrei an die Innenoberfläche der Zylinderlaufbüchse 2 angelegt oder radial nach innen abgehoben werden. Dank der außermittigen Anordnung der Stellzylinder 10 und dank der Außenanordnung des Scharnieres 9 ist die Ausrichtvorrichtung in der Mitte einbaufrei gehalten, so daß dort genügend Platz zur Unterbringung der Induktorschleifen 5 und ihrer Halterung vorhanden ist. Wenngleich in den Zeichnungen lediglich eine Induktorschleife mit ihrer Halterung und Stromzuführung gezeigt ist, so ist auch ohne weiteres ein Induktorkopf mit einer Doppelanordnung von Induktorschleifen möglich; die zweite Induktorschleife bzw. Ihrer Halterung ist spiegelsymmetrisch gegenüberliegend zu denken.

Grundsätzlich sind bei dem erfindungsgemäßen Induktorkopf die Induktorschleifen ebenfalls beweglich innerhalb der Ausrichtvorrichtung in der Weise gehaltert, daß mit dem Anlegen der Klemmschalen 8 auch die Induktorschleifen lagedefiniert an die Innenoberfläche der Zylinderlaufbüchse 2 in Arbeitsposition verschoben werden. Dies kann zum einen dadurch geschehen, daß die Induktorschleifen und ihre Halterung gesondert gegenüber den Klemmschalen 8 bzw. Klemmstäben radial beweglich geführt werden. Beim dargestellten Ausführungsbeispiel ist die Induktorschleife jedoch unbeweglich der Klemmschalen 8 zugeordnet, so daß die Induktorschleife 5 einheitlich mit den Klemmschalen 8 bewegt wird.

Der Leiter 6 der Induktorschleifen 5 ist ein Rundrohr aus Kupfer. Und zwar ist das Rundrohr zu der im Wesentlichen haarnadelförmigen Induktorschleife 5 gebogen. Das Innere des Leiters 6 kann mit Kühlwasser beaufschlagt und so die Verlustwärme rasch abgeführt werden. Die Leiter 6 sind im Arbeitsbereich der Induktorschleife 5, also in dem Bereich, in welchem die Leiter einen gleichbleibenden und geringen Abstand zur Innenoberfläche der Zylinderlaufbüchse 2 aufweisen, im Durchmesser entsprechend der gewünschten Streifenbreite des zu härtenden Streifens ausgebildet. Um in den außerhalb des Arbeitsbereiches liegenden Partien des Leiters geringere Stromverluste zu ermöglichen, sind dort größere Leitungsquerschnitte, insbesondere im Bereich der Stromzuleitungen 14 vorgesehen. Diese Stromzuleitungen sind im Ausmaß der Radialverschiebungen der Induktorschleife beweglich, was beispielsweise durch eine gewissen Eigenelastizität der Stromzuführungen und eine starre Halterung der Induktorschleife 5 innerhalb der Klemmschale 8 erreichbar sein kann.

Um die Induktorschleifen formstabil und lagegenau haltern zu können, ist für jede Induktorschleife ein Block 11 aus einem elektrisch isolierenden Werkstoff vorgesehen, in welchen der Leiter der Induktorschleife formschlüssig eingelassen und darin befestigt ist. Bei dem Werkstoff für den Block 11 kann es sich beispielsweise um sogenanntes Grünglas handeln, welches eine Werkstattbezeichnung für einen temperaturfesten und spanabhebbar bearbeitbaren, transparenten glasähnlichen Kunststoff ist. In diesen Block 11 werden entsprechend dem Verlauf der Leiter 6 formentsprechende Kanäle eingefräßt bzw. gebohrt, in die die Induktorschleife dann eingelassen werden kann. Zur Befestigung der Induktorschleife 5 innerhalb der Nuten des Blockes 11 kann ein Klebstoff oder eine Vergußmasse verwendet werden. Es ist auch eine seitliche Klemmung mit geeigneten keilförmigen Leisten und/oder mittels Schrauben denkbar.

Um die relative Eintauchtiefe des Induktorkopfes in die Zylinderlaufbüchse 2 und somit die axiale Lage des zu härtenden Bereiches 7 in Relation zur Zylinderlaufbüchse 2 exakt definieren zu können, ist an einer der beiden Klemmschalen 8 ein Bund 13 angebracht, der seinerseits einen Distanzring 15 trägt, welcher vollständig den Induktorkopf 3 umschließt. Dieser auswechselbare Distanzring 15 weist an seiner unteren, der Zylinderlaufbüchse 2 zugekehrten Stirnseite eine achssenkrechte Anschlagfläche 16 auf, die mit einer entsprechenden, ebenfalls achssenkrechten Stirnfläche im oberen Endbereich der Zylinderlaufbüchse 2 mechanisch zusammenwirkt. Durch die Höhe des Distanzringes 15 kann die Axiallage des zu härtenden Bereiches 7 in Relation zur Zylinderlaufbüchse 2 bestimmt werden.

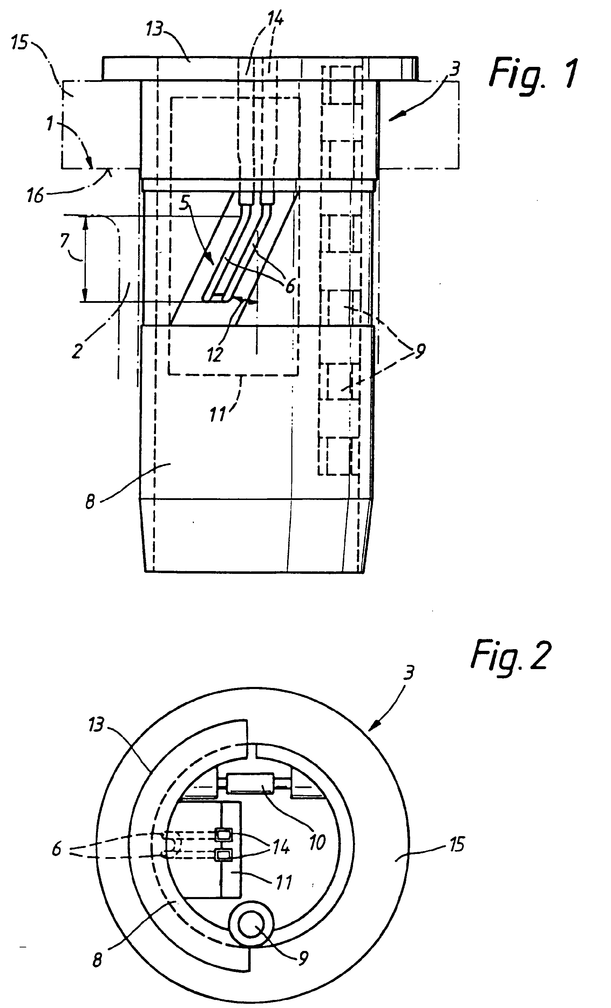

Beim Betrieb des Induktorkopfes wird lediglich der Bereich der Innenoberfläche der Zylinderlaufbüchse 2 randnah erwämt, der unmittelbar dem Leiter 6 der Induktorschleife gegenüberliegt, wobei der kurze untere Verbindungssteg zwischen den beiden Leitern 6 keine nennenswerte Erwärmung zeitigt, weil der Leiter hier in einem größeren Abstand zur Innenoberfläche der Zylinderlaufbüchse verlegt ist. Im Wesentlichen kommt also eine Erwärmung lediglich in den zumindest annähernd geradlinig verlaufenden Leitern zustande. Gleichwohl können auch leichte Krümmungen der Leiter 6 zugelassen werden. Deswegen kommen nicht nur solche Ausbildungen der Induktorschleifen in Betracht, bei denen die Leiter 5 parallel zu den Mantellinien verlaufen, sondern - wie das Ausführungsbeispiel nach Figur 1 zeigt, auch solche, bei denen die Leiter geneigt - Neigungswinkel 12 - zu den Mantellinien der Innenoberfläche der Zylinderlaufbüchse verlaufen. Hierbei verlaufen die Leiter 6 zwar in der Zylinderabwicklung geradlinig, jedoch weisen sie bei tangentialer Blickrichtung quer auf den Leiter 6 einen gekrümmten Verlauf auf. Diese leichte Krümmung ist jedoch - wie gesagt - für eine induktive Leistungsübertragung bei hoher Energiedichte unschädlich. Es ist ohne weiteres auch denkbar, daß die einzelnen Leiter 6 in der Zylinderabwicklung einen gekrümmten Verlauf haben. Derartige unterschiedliche Streifenmuster sind, sowohl was die Größe des Neigungswinkels 12 als auch was eine etwaige Krümmung anlangt, in unterschiedlichen Formen bekannt, wenn auch erzeugt durch andere Härteverfahren, z. B. Laserhärten.

Bei einer Mehrfachanordnung von Induktorschleifen 5 innerhalb eines Induktorkopfes wird man diese in untereinander etwa gleicher Axiallage und - in Bezug auf die Richtung der Mantellinien - in etwa gleicher Winkellage am Umfang des Induktorkopfes verteilt anbringen. Aufgrund einer Mehrfachanordnung von Induktorschleifen am Umfang kann das Härten einer Zylinderlaufbüchse rascher abgeschlossen werden, weil entsprechend weniger Umfang je Induktorschleife gehärtet werden muß.

Die Arbeitsweise der Härteeinrichtung ist durch eine ihr zugeordnete Steuerung sichergestellt, gemäß der das elektrische Beaufschlagen der Induktorschleife 5 mit Hochfrequenzstrom nur im relativen Stillstand des Induktorkopfes 3 gegenüber der Zylinderlaufbüchse 2 erfolgt. Ein relatives Verschwenken des Induktorkopfes 3 gegenüber der Zylinderlaufbüchse 2 ist aufgrund der Steuerung nur bei elektrisch abgeschalteten Induktorschleifen 5 möglich. Aufgrund dieser Arbeitsweise wird ein Erwärmen bzw. Härten während der Induktorkopfbewegung vermieden. Es ist bewußt eine schrittweise und intermetierende Erwärmung während des Stillstandes und einem anschließenden Weitertakten angestrebt. Aufgrund des Härtens nur im relativen Stillstand bei spielfrei und unter Krafteinwirkung angelegten Klemmschalen und in Arbeitsposition gebrachten Induktorschleifen wird sichergestellt, daß der einmal vorgegebene und einjustierte Arbeisabstand der Leiter 6 der Induktorschleifen reproduziergenau bei allen Erwärmungsvorgängen eingehalten wird. Dadurch ist ein auf eine sehr dünne Randzone beschränktes definiertes Erwärmen bzw. Härten durch Selbstabschreckung und somit ein verzugsfreies Härten möglich. Zu dem verzugsfreien Härten trägt außerdem das intermetierende Arbeiten und das vereinzelte Legen von Hartstreifen auf Abstand bei. Zweckmäßigerweise wird die diese Arbeitsweise bewerkstelligende Steuerung der Härteeinrichtung so ausgelegt, daß ein relatives Verschwenken des Induktorkopfes 3 gegenüber der Zylinderlaufbüchse 2 funktionell verriegelt ist, solange die Klemmschalen 8 nicht abgehoben und solange die Induktorschleifen 5 nicht elektrisch abgeschaltet sind. Umgekehrt ist zweckmäßigerweise ein elektrisches Einschalten der Induktorschleifen 5 solange funktionell verhindert, solange nicht zunächst ein Weitertakten in Umfangsrichtung und anschließend ein erneutes Anlegen der Klemmschalen 8 gemeldet ist.

Um eine randnahe Erwärmung und eine Selbstabschreckung durch das darunterliegende, nicht erwärmte Basismaterial erreichen zu können, muß die Randzone in einem relativ dünnen Bereich von maximal etwa 1,5 mm bei relativ hoher Energiedichte und sehr rasch, z.B. noch innerhalb einer Sekunde, gewissermaßen schockartig angewärmt werden, so daß sich örtlich und vorübergehend ein sehr steiler Temperaturgradient zu dem nicht erwärmten tierferliegenden Basismaterial einstellt. Die Erwärmung muß sich zeitlich etwa in einer Sekunde auf ausreichend hohe Temperaturen bis in den Umwandlungsbereich abgespielt haben. Je höher die Energiedichte ist, umso rascher kann die Erwärmung erfolgen. Und zwar kommen Energiedichten im Bereich von mehr als 5 kW/cm² in Betracht. Eine Überschreitung der Erwärmungszeit von etwa 1,5 sec. erscheint wenig sinnvoll, weil sich in dieser Zeit schon ein relativ flacher Temperaturgradient innerhalb des Werkstückes ausbilden kann, der nicht mehr eine ausreichend rasche Selbstabschreckung durch das tieferliegende Basismaterial sicherstellt. Um auf induktive Weise bei Energiedichten im Bereich von etwa 10 kW/cm² mit der Induktorschleife nur die oberflächennahen Randzonen der Zylinderlaufbüchse ausreichend erwärmen zu können, muß der Hochfrequenzstrom eine Frequenz oberhalb von 100 kHz, vorzugsweise sogar oberhalb von 300 kHz aufweisen. Probehärtungen wurden bei einer Frequenz zwischen 400 und 500 kHz durchgeführt. Bei derartig hochfrequenten Wechselströmen lassen sich auf induktiven Wege die erwähnten Energiedichten bei der Erwärmung übertragen und die sehr rasche Erwärmung in dünnen Randschichten erzielen. Dabei stellt sich auch der erwünschte, sehr steile Temperaturgradient beim Übergang zu dem nicht erwärmten, tieferliegenden Basismaterial ein, der für eine Selbstabschreckung der erwärmten Randzone erforderlich ist.

Abschließend sei noch auf denkbare Alternativformen für die Ausrichtvorrichtung des Induktorkopfes kurz eingegangen. Und zwar ist es ohne weiteres denkbar, daß die Ausrichtvorrichtung in Form eines zylindrischen Käfigs ausgebildet ist, wobei die parallel zu den Mantellinien verlaufenden Käfigstangen radial verschiebbar gelagert und geführt sind und alle synchron antreibbar sind. Beispielsweise ist eine solche synchrone Verschiebemöglichkeit dadurch realisierbar, daß alle radial verschiebbaren Klemmstäbe jeweils an eine gesonderte, parallel verlaufende Exzenterwelle gekoppelt sind, die ihrerseits alle gemeinsam über ein Ringzahnrad einheitlich und im Ausmaß gleichmäßig verdreht werden können. Es ist auch denkbar, derartige käfigartig angeordnete Klemmstäbe ähnlich wie die Hohnleisten an einer Hohnahle über axial verschiebbare Konusflächenpaare radial zu verstellen. Anstelle von durchgehenden Klemmleisten ist es ohne weiteres auch denkbar, diese relativ kurz zu halten oder zumindest die Berührungsflächen mit der Innenoberfläche der Zylinderlaufbüchse relativ kurz zu halten, so daß im Prinzip nur noch von Klemmnoppen gesprochen werden kann. In dieser Hinsicht steht ein weites Feld konstruktiver Möglichkeiten offen.

## Patentansprüche

1. Einrichtung zum innenseitigen induktiven Erwärmen von Zylinderlaufbüchsen (2) von Hubkolbenmaschinen auf Umwandlungstemperatur zum Zwecke des Härtens,
- mit einem relativ zur Zylinderlaufbüchse axialbeweglichen und relativ zu ihr verdrehbaren Induktorkopf (3),
- der Induktorkopf (3) enthält eine an die Größe der Zylinderlaufbüchse (2) angepaßte Ausrichtvorrichtung aus nicht magnetisierbarem Werkstoff zum mechanischen Ausrichten des Induktorkopfes (3) in eine definierte radiale Lage zur Innenoberfläche der Zylinderlaufbüchse (2),
- der Induktorkopf (3) enthält ferner wenigstens eine Induktorschleife (5) in Form eines elektrischen Leiters (6), der sich über den gesamten axialen Bereich der zu härtenden Zone (7), aber in Umfangsrichtung nur über einen kleinen Bruchteil des zu härtenden Bereiches erstreckt und der in Arbeitsposition der Induktorschleife (5) über seine Länge hinweg einen überall gleichgroßen Abstand zur Innenoberfläche der Zylinderlaufbüchse (2) aufweist,
- der Induktorkopf (3) enthält ferner eine formstabile, lagesichernde elektrisch isolierende Halterung der Induktorschleife innerhalb der Ausrichtvorrichtung sowie eine an beiden Enden des elektrischen Leiters der Induktorschleife angeschlossene elektrische Stromversorgung aus einer Hochfrequenz-Stromquelle,
**gekennzeichnet** durch die Gemeinsamkeit folgender Merkmale:
a) die Ausrichtvorrichtung ist als ein spreizbarer, mittenfreier Käfig ausgebildet, der außenseitig mit spielfrei und unter Krafteinwirkung an die Innenoberfläche der Zylinderlaufbüchse (2) anlegbaren Klemmstäben, Klemmnoppen oder Klemmschalen (8) - im folgenden kurz und stellvertretend "Klemmstäbe oder dgl. (8)" genannt - versehen ist,
b) die Induktorschleife(n) (5) ist (sind) ebenfalls beweglich innerhalb der Ausrichtvorrichtung in der Weise gehaltert, daß mit dem Anlegen der Klemmstäbe oder dgl. (8) auch die Induktorschleife(n) (5) lagedefiniert an die Innenoberfläche der Zylinderlaufbüchse (2) in Arbeitsposition verschoben werden,
c) der Einrichtung zum Erwärmen ist eine Steuerung zugeordnet, gemäß der das elektrische Beaufschlagen der Induktorschleife(n) (5) mit Hochfrequenzstrom nur in relativem Stillstand des Induktorkopfes (3) gegenüber der Zylinderlaufbüchse (2) und ein relatives Verschwenken des Induktorkopfes (3) gegenüber der Zylinderlaufbüchse (2) nur bei elektrisch abgeschalteter(-ten) Induktorschleife(n) (5) erfolgt;
d) die Anordnung und Ausbildung der Induktorschleife(n) (5) sowie die elektrische Energiebeaufschlagung mit Hochfrequenzstrom bei Frequenzen oberhalb von 100 kHz sind so vorgesehen, daß eine kurzzeitige, randnahe Erwärmung auf Umwandlungstemperatur im Bereich von maximal etwa 1,5 mm und innerhalb von maximal etwa einer Sekunde bei einem sehr steilen Temperaturgradienten zu dem tiefer liegenden, nicht erwärmten Basismaterial erfolgt und infolgedessen eine härtewirksame Selbstabschreckung des auf Umwandlungstemperatur erwärmten Bereiches durch das Basismaterial aufgrund von Wärmeleitung möglich ist.

2. Einrichtung nach Anspruch 1,
**dadurch gekennzeichnet,**
daß die Klemmstäbe oder dgl. (8) servomotorisch über im Induktorkopf angeordnete Stellorgane (10) anlegbar bzw. einziehbar sind.

3. Einrichtung nach Anspruch 1 oder 2,
**dadurch gekennzeichnet,**
daß die Induktorschleife(n) (5) feststehend in Relation zu einem Klemmstab oder dgl. (8) angeordnet ist (sind).

4. Einrichtung nach Anspruch 1, 2 oder 3,
**dadurch gekennzeichnet,**
daß die Induktorschleife(n) (5) in einen Block (11) aus elektrisch isolierendem Werkstoff formschlüssig eingelassen und darin befestigt ist (sind).

5. Einrichtung nach einem der Ansprüche 1 bis 4,
**dadurch gekennzeichnet,**
daß die Leiter (6) der Induktorschleife(n) (5) zu den Mantellinien der Innenoberfläche der Zylinderlaufbüchse (2) geneigt verlaufen.

6. Einrichtung nach einem der Ansprüche 1 bis 5,
**dadurch gekennzeichnet,**
daß zwei bis vier formgleiche Induktorschleifen (5) in untereinander etwa gleicher Axiallage und - in Betug auf die Richtung der Mantellinien - gleicher Winkellage am Umfang des Induktorkopfes (3) verteilt angeordnet sind.

7. Einrichtung nach einem der Ansprüche 1 bis 6,
**dadurch gekennzeichnet,**
daß am Induktorkopf (3) eine dessen relative Eintauchtiefe in die Zylinderlaufbüchse (2) definierende achssenkrechte Anschlagfläche (16) angeordnet ist.

8. Einrichtung nach einem der Ansprüche 1 bis 7,
**dadurch gekennzeichnet**
daß die Leistungsdichte bei der induktiven Energieübertragung größer als etwa 5 kW/cm² ist.

9. Einrichtung nach einem der Ansprüche 1 bis 8,
**dadurch gekennzeichnet,**
daß die Frequenz des Hochfrequenzstromes größer als 300 kHz, vorzugsweise etwa 400 bis 500 kHz ist.

## Claims

1. Device for the inductive heating of the inside of cylinder liners (2) of reciprocating-piston engines to transformation temperature for the purpose of hardening,
- with an inductor head (3) axially movable relative to the cylinder liner and rotatable in relation to it,
- the inductor head (3) contains an aligning device matched to the size of the cylinder liner (2) and consisting of non-magnetisable material, for the mechanical alignment of the inductor head (3) into a defined radial position relative to the inner surface of the cylinder liner (2),
- the inductor head (3) contains, furthermore, at least one inductor loop (5) in the form of an electrical conductor (6) which extends over the entire axial region of the zone to be hardened (7), but in the circumferential direction only over a small fraction of the region to be hardened, and which, in the working position of the inductor loop (5), is over its entire length at a distance from the inner surface of the cylinder liner (2) which is the same everywhere,
- the inductor head (3) contains, furthermore, a dimensionally stable position-securing electrically insulating mounting of the inductor loop within the aligning device and an electrical current supply connected to both ends of the electrical conductor of the inductor loop and coming from a high-frequency current source,
characterized by the combination of the following features:
a) the aligning device is designed as a spreadable centre-free cage equipped on the outside with clamping bars, clamping bosses or clamping shells (8) - hereafter referred to briefly and representatively as "clamping bars or the like (8)" - which can be applied free from play and under the effect of force against the inner surface of the cylinder liner (2),
b) the inductor loop or inductor loops (5) is or are likewise mounted movably within the aligning device in such a way that, when the clamping bars or the like (8) are applied, the inductor loop or inductor loops (5) are also displaced in a locationally defined manner into the working position against the inner surface of the cylinder liner (2),
c) the heating device is assigned a control, according to which the inductor loop or inductor loops (5) are subjected electrically to a high-frequency current only when the inductor head (3) is at a relative standstill in relation to the cylinder liner (2) and a relative pivoting of the inductor head (3) in relation to the cylinder liner (2) takes place only when the inductor loop or inductor loops (5) are cut off electrically;
d) the arrangement and design of the inductor loop or inductor loops (5) and the subjecting of these to electrical energy by means of high-frequency current at frequencies above 100 kHz are so provided that a brief marginal heating to transformation temperature takes place in the range of a maximum of approximately 1.5 mm and within a maximum of approximately one second at a very steep temperature gradient in relation to the lower-lying non-heated basic material, and consequently it is possible for the region heated to transformation temperature to be self-quenched with a hardening effect by the basic material as a result of heat conduction.

2. Device according to Claim 1, characterized in that the clamping bars or the like (8) can be applied and retracted by servo motor via actuating members (10) arranged in the inductor head.

3. Device according to Claim 1 or 2, characterized in that the inductor loop or inductor loops (5) is or are arranged in a stationary manner in relation to a clamping bar or the like (8).

4. Device according to Claim 1, 2 or 3, characterized in that the inductor loop or inductor loops (5) is or are embedded positively in a block (11) consisting of electrically insulating material and is or are fastened therein.

5. Device according to one of Claims 1 to 4, characterized in that the conductors (6) of the inductor loop or inductor loops (5) extend at an inclination relative to the generatrices of the inner surface of the cylinder liner (2).

6. Device according to one of Claims 1 to 5, characterized in that two to four inductor loops (5) of identical shape are arranged distributed on the circumference of the inductor head (3) in axial positions approximately identical to one another and, in relation to the direction of the generatrices, in identical angular positions.

7. Device according to one of Claims 1 to 6, characterized in that arranged on the inductor head (3) is an axis-perpendicular stop face (16) defining its relative depth of penetration into the cylinder liner (2).

8. Device according to one of Claims 1 to 7, characterized in that the power density during the inductive energy transmission is higher than approximately 5 kW/cm².

9. Device according to one of Claims 1 to 8, characterized in that the frequency of the high-frequency current is higher than 300 kHz, preferably approximately 400 to 500 kHz.

## Revendications

1. Dispositif pour chauffer par induction le côté intérieur de chemises de cylindre de machines à pistons alternatifs à la température de transformation en vue du durcissement par trempe,
- comprenant une tête d'inducteur (3) mobile axialement par rapport à la chemise de cylindre et pouvant être tournée par rapport à elle,
- la tête d'inducteur (3) contenant un dispositif d'alignement adapté à la grandeur de la chemise de cylindre (2), fait d'un matériau non aimantable et servant à l'alignement mécanique de la tête d'inducteur (3) à une position radiale définie par rapport à la surface intérieure de la chemise de cylindre (2),
- la tête d'inducteur (3) contenant en outre au moins une boucle d'inducteur (5) sous la forme d'un conducteur électrique (6) qui couvre toute l'étendue axiale de la zone à tremper (7), mais s'étend seulement sur une petite fraction de la zone à tremper dans la direction périphérique, et présente, à la position de travail de la boucle d'inducteur (5), sur toute sa longueur, une distance qui est partout la même par rapport à la surface intérieure de la chemise de cylindre (2) et
- la tête d'inducteur (3) contenant en outre un support électriquement isolant de forme stable pour le maintien en place de la boucle d'inducteur à l'intérieur du dispositif d'alignement, ainsi qu'une alimentation électrique, raccordée aux deux extrémités du conducteur électrique de la boucle d'inducteur, à partir d'une source de courant à haute fréquence,
caractérisé par l'ensemble des caractéristiques suivantes:
a) le dispositif d'alignement est réalisé comme une cage expansible à centre libre, qui est pourvue sur le côté extérieur de barreaux de serrage, boutons de serrage ou coquilles de serrage (8) - appelés ci-après brièvement et à titre représentatif "barreaux de serrage ou analogues (8)" - applicables sans jeu et avec force contre la surface intérieure de la chemise de cylindre (2),
b) la boucle d'inducteur ou les boucles d'inducteur (5) est ou sont également supportée(s) mobile(s) à l'intérieur du dispositif d'alignement, de manière que lors de l'application des barreaux de serrage ou analogues (8) contre la chemise, la boucle d'inducteur ou les boucles d'inducteur (5) soit ou soient également déplacée(s) à une position de travail définie en regard de la surface intérieure de la chemise de cylindre (2),
c) au dispositif de chauffage est coordonnée une commande selon laquelle l'application d'un courant électrique de haute fréquence à la boucle ou aux boucles d'inducteur (5) s'effectue seulement dans un état d'arrêt relatif de la tête d'inducteur (3) par rapport à la chemise de cylindre (2) et selon laquelle un pivotement relatif de la tête d'inducteur (3) par rapport à la chemise de cylindre (2) s'effectue seulement lorsque la boucle ou les boucles d'inducteur (5) est ou sont déconnectée(s) électriquement; et
d) l'agencement et la réalisation de la boucle ou des boucles d'inducteur (5), ainsi que l'alimentation en énergie électrique par un courant de haute fréquence, à des fréquences supérieures à 100 kHz, sont prévus de manière que s'effectue un échauffement marginal de courte durée à la température de transformation, jusqu'à une profondeur maximale de 1,5 mm environ et dans au maximum une seconde environ, sous un gradient de température très important avec le matériau de base situé plus en profondeur et qui n'est pas échauffé et que, de ce fait, la zone échauffée à la température de transformation peut être refroidie brusquement, par un effet autotrempant qui augmente la dureté, par le matériau de base, par conduction de la chaleur.

2. Dispositif selon la revendication 1, caractérisé en ce que les barreaux de serrage ou analogues (8) sont applicables contre la chemise et rétractables par servomoteur ou par l'intermédiaire d'organes de positionnement (10) installés dans la tête d'inducteur.

3. Dispositif selon la revendication 1 ou 2, caractérisé en ce que la boucle ou les boucles d'inducteur (5) est ou sont disposée(s) fixe(s) par rapport à un barreau de serrage ou analogue (8).

4. Dispositif selon la revendication 1, 2 ou 3, caractérisé en ce que la boucle ou les boucles d'inducteur (5) est ou sont disposée(s) à complémentarité de formes dans un bloc (11) de matériau électriquement isolant, dans lequel elle(s) est ou sont fixée(s).

5. Dispositif selon une des revendications 1 à 4, caractérisé en ce que les conducteurs (6) de la boucle ou des boucles d'inducteur (5) sont inclinés par rapport aux génératrices de la surface intérieure de la chemise de cylindre (2).

6. Dispositif selon une des revendications 1 à 5, caractérisé en ce que deux à quatre boucles d'inducteur (5) de même forme sont disposées de façon répartie, à des positions axiales à peu près identiques entre elles et - par rapport à la direction des génératrices - à des positions angulaires identiques, à la périphérie de la tête d'inducteur (3).

7. Dispositif selon une des revendications 1 à 6, caractérisé en ce que la tête d'inducteur (3) est pourvue d'une surface de butée (16) perpendiculaire à l'axe et définissant la profondeur d'insertion relative de la tête d'inducteur (3) dans la chemise de cylindre (2).

8. Dispositif selon une des revendications 1 à 7, caractérisé en ce que la puissance volumique dans la transmission inductive de l'énergie est supérieure à environ 5 kW/cm².

9. Dispositif selon une des revendications 1 à 8, caractérisé en ce que la fréquence du courant de haute fréquence est supérieure à 300 kHz et est de préférence d'environ 400 à 500 kHz.
